# EUROPÄISCHE PATENTSCHRIFT

(11) **EP 0 788 899 B1**
(45) Veröffentlichungstag und Bekanntmachung des Hinweises auf die Patenterteilung: **22.03.2000**
(21) Anmeldenummer: 97101614.2
(22) Anmeldetag: 03.02.1997
(51) Int. Cl.: B60C 11/12

(54) **Fahrzeugluftreifen**
Vehicle tyre
Bandage pneumatique pour véhicule

(30) Priorität: 12.02.1996 AT 24196
(43) Veröffentlichungstag der Anmeldung: 13.08.1997
(73) Patentinhaber: Semperit Reifen Gesellschaft m.b.H-, 2514 Traiskirchen (AT)
(72) Erfinder: Peschel, Wolfgang, Dipl.-Ing., 30823 Garbsen (DE); Diensthuber, Franz,, 2544 Schönau (AT)
(74) Vertreter: Vinazzer, Edith, Dipl.-Ing.

(56) Entgegenhaltungen:
- EP-A- 0 330 643
- DE-A- 4 326 036
- PATENT ABSTRACTS OF JAPAN vol. 013, no. 083 (M-802), 27.Februar 1989 & JP 63 279904 A (TOYO TIRE & RUBBER CO LTD), 17.November 1988,
- PATENT ABSTRACTS OF JAPAN vol. 017, no. 565 (M-1495), 13.Oktober 1993 & JP 05 162512 A (YOKOHAMA RUBBER CO LTD:THE), 29.Juni 1993,
- PATENT ABSTRACTS OF JAPAN vol. 014, no. 221 (M-0971), 10.Mai 1990 & JP 02 053610 A (TOYO TIRE & RUBBER CO LTD), 22.Februar 1990,

## Beschreibung

Die vorliegende Erfindung betrifft einen Fahrzeugluftreifen, insbesondere für den Einsatz unter winterlichen Fahrbedingungen, mit einem Laufstreifenprofil, welches durch in Umfangsrichtung verlaufende Nuten und durch Quernuten in Profilelemente gegliedert ist, die mit mindestens zwei verschiedenen Umfangslängen vorgesehen sind, wobei reifenschulterseitig als Profilelemente jeweils eine Schulterblockreihe angeordnet ist und wobei zumindest in jedem Schulterblock, vorzugsweise in sämtlichen Profilelementen, jeweils mehrere Lamellenfeineinschnitte angeordnet sind, die jeweils zueinander parallel verlaufen und gleich beabstandet sind.

Fahrzeugluftreifen mit derartigen Laufstreifenprofilen sind in unterschiedlichen Ausführungsvarianten bekannt und haben sich auch in der Praxis gut bewährt. Es gibt auch eine Anzahl von Patenten und Patentanmeldungen, die auf die besondere Ausgestaltung solcher Laufstreifenprofile gerichtet sind. So ist beispielsweise ein Fahrzeugluftreifen der eingangs genannten Art aus der AT-B 390 916 bekannt. Winterreifen, die gemäß dieser Patentschrift ausgeführt sind, sind seit einigen Jahren mit großem Erfolg auf dem Markt und besitzen sehr ausgewogene Winterfahreigenschaften. Insbesondere vom Fahrverhalten her entspricht jedoch dieser bekannte Reifen nicht mehr den heutigen Anforderungen.

Hier setzt nun die Erfindung ein, deren Aufgabe darin besteht, einen Reifen der eingangs genannten Art hinsichtlich des Fahrverhaltens, und hier vor allem hinsichtlich des Ansprechens des Reifens um die Nullage, des Verhaltens bei Spurwechsel und hinsichtlich der Kurvenstabilität zu verbessern.

Gelöst wird die gestellte Aufgabe erfindungsgemäß dadurch, daß der gegenseitige Normalabstand der Lamellenfeineinschnitte in einem Schulterblock größerer Umfangslänge kleiner ist als der gegenseitige Normalabstand der Lamellenfeineinschnitte in einem Schulterblock kleinerer Umfangslänge.

Diese erfindungsgemäße Maßnahme bewirkt, über den gesamten Umfang des Reifens gesehen, eine Vergleichmäßigung der Steifigkeit der Schulterblöcke, da durch die unterschiedlichen Abstände der Lamellenfeineinschnitte, je nachdem, ob diese innerhalb eines Blockes mit längerer oder kürzerer Umfangslänge verlaufen, der gegenseitige Abstützungseffekt der Blockbereiche zwischen den Feineinschnitten entsprechend beeinflußt wird. Diese Vergleichmäßigung hat nun den Effekt, daß das Fahrverhalten des Reifens deutlich verbessert wird. Dies zeigt sich insbesondere in einem sehr guten Ansprechen des Reifens um die Nullage, dem Ansprechen bei Spurwechsel und in der erzielten Kurvenstabilität. Die Vergleichmäßigung der Blocksteifigkeiten hat zudem auch günstige Auswirkungen auf Schneegriff, Eisgriff und insbesondere auch auf das Bremsverhalten auf nasser Fahrbahn.

Zusätzliche vorteilhafte Ausgestaltungen der Erfindung sind in den Unteransprüchen enthalten.

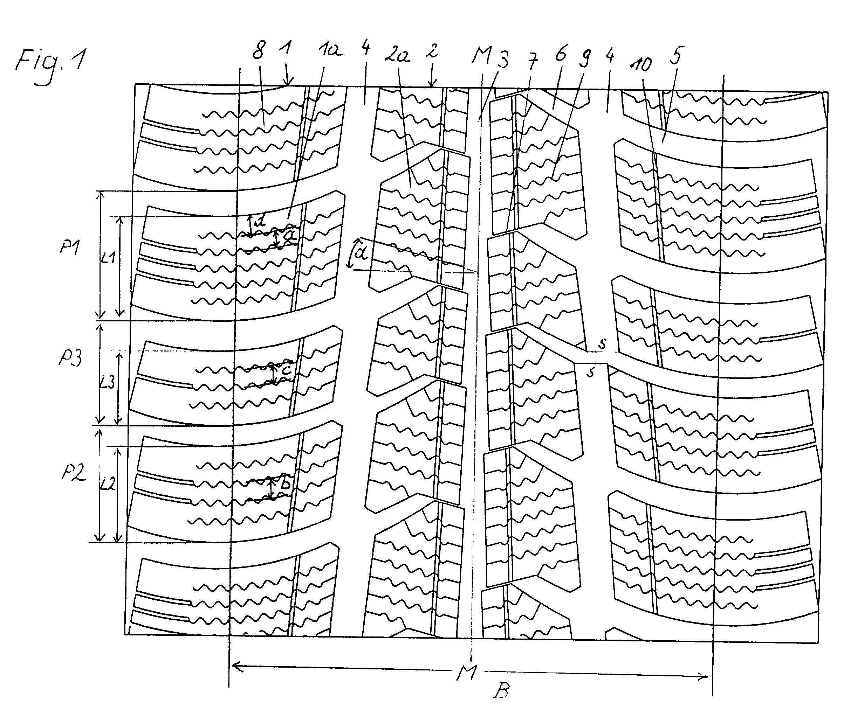

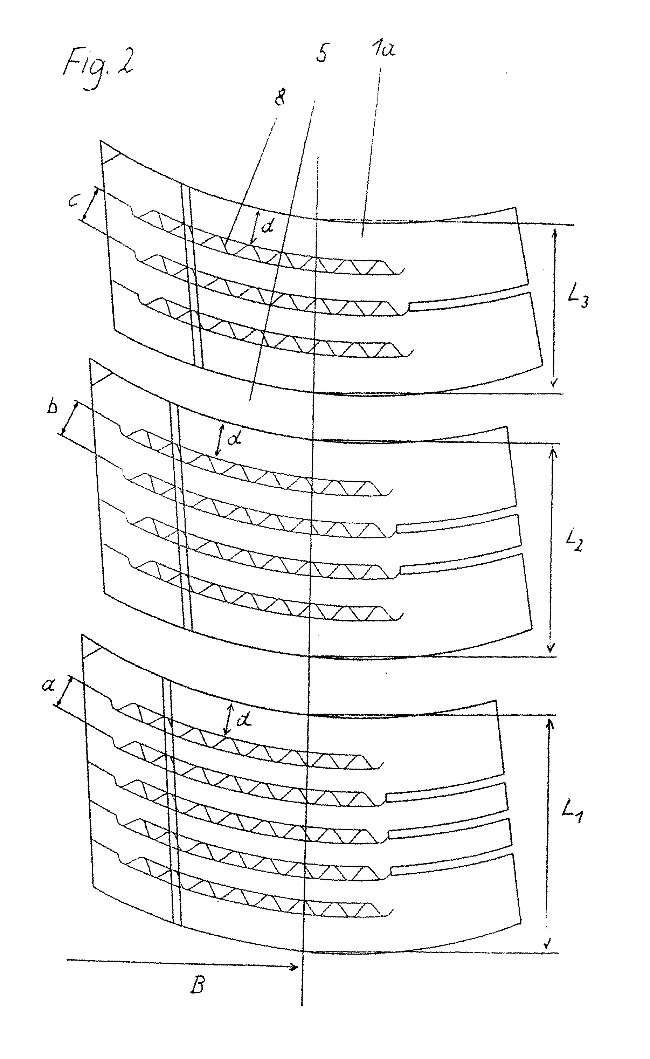

Weitere Merkmale, Vorteile und Einzelheiten der Erfindung werden nun anhand der Zeichnung, die ein Ausführungsbeispiel darstellt, näher beschrieben. Dabei ist in Fig. 1 eine Draufsicht auf eine Teilabwicklung eines Laufstreifenprofils dargestellt. Fig. 2 zeigt in vergrößerter Darstellung drei Schulterblöcke des Profils aus Fig. 1.

Das in der Zeichnungsfigur gezeigte Laufstreifenprofil ist insbesondere für PKW-Winterreifen vorgesehen. In der nun folgenden Beschreibung wird auf die Breite B des Laufstreifens, die der Breite des Laufstreifens in der Bodenaufstandsfläche des Reifens unter normalen Betriebsbedingungen (gemäß E.T.R.T.O.-Standards) entspricht, Bezug genommen.

Beim dargestellten Laufstreifenprofil handelt es sich um ein sogenanntes laufrichtungsgebunden gestaltetes Profil, wobei erwähnt sei, daß die gegenständliche Erfindung auf solche Profile nicht beschränkt ist. Das Laufstreifenprofil setzt sich aus zwei Schulterblockreihen 1 und zwei Mittelblockreihen 2 zusammen, wobei letztere durch eine entlang der Mittelumfangslinie M - M verlaufende Umfangsnut voneinander getrennt sind. Weitere Umfangsnuten 4 trennen die mittleren Blockreihen 2 von den Schulterblockreihen 1.

Die Blöcke 1a der Schulterblockreihen 1 sind in Umfangsrichtung durch Quernuten 5 voneinander getrennt, die einen leicht bogenförmig gekrümmten Verlauf besitzen Die Blöcke 2a der mittleren Blockreihen 2 sind einerseits durch sacknutartig endende Quernuten 6 voneinander getrennt und sind andererseits durch an diese Quernuten 6 anschließende schmale Einschnitte 7, die eine Breite von 0,5 bis 1,5 mm und eine geringere Tiefe als die sonstige Dessintiefe besitzen, gewissermaßen aneinander gekoppelt. Der Verlauf der Quernuten 5, 6 ist so gewählt, daß ein üblicherweise als gepfeilt bezeichnetes Profil vorliegt. Die Ausbildung der Quernuten 6 und Einschnitte 7 ist ferner so getroffen, daß die Einschnitte 7 eine Länge besitzen, die ca. ¼ der in Reifenquerrichtung gemessenen Breite der mittleren Blockreihen 2 beträgt. Die Anordnung der Quernuten 5 gegenüber den Quernuten 6 ist so getroffen, daß die Quernuten 5 nicht kontinuierlich in die Quernuten 6 übergehen, sondern ihre einander zugeordneten Einmündungsbereiche in die Umfangsnuten 4, in Reifenquerrichtung betrachtet, gegenüberliegen. In der Zeichnungsfigur ist diese Ausgestaltung unter zeichnerischer Ergänzung zweier entsprechender Blockeckbereiche und Einzeichnung zweier gerader Linien s dargestellt. Die zeichnerische Ergänzung der Blockeckbereiche ist aus dem Grund erforderlich, weil die Blöcke an diesen Eckbereichen in bekannter Weise aus Abriebsgründen abgeschrägt ausgebildet sind. Die die Umfangsnuten 4, 3 begrenzenden Blockkanten der Blöcke 1a, 2a sind sämtlich gegenüber der Umfangsrichtung geneigt angeordnet, der zugehörige Winkel zur Umfangsrichtung beträgt insbesondere zwischen 5 und 15°. Aufgrund der laufrichtungsgebundenen Gestaltung des Profiles sind diese in der einen Laufstreifenhälfte verlaufenden Blockkanten gegensinnig zu jenen in der anderen Laufstreifenhälfte verlaufenden geneigt. Aus Geräuschgründen sind ferner die in der einen Laufstreifenhälfte verlaufenden Blockreihen 1, 2 gegenüber jenen beiden, die in der zweiten Laufstreifenhälfte verlaufen, in Umfangsrichtung versetzt. Dadurch ergibt sich die dargestellte Strukturierung der zentralen Umfangsnut 4 mit etwa keilartig verlaufenden Nutabschnitten.

Durch die Schrägstellung der die Umfangsnuten 4 begrenzenden Blockkanten der Blöcke 1a, 2a ergibt sich die dargestellte, leichte Zick-zack-Form der Umfangsnuten 4.

Das Laufstreifenprofil ist nach dem Verfahren der Pitchlängenvariation geräuschoptimiert. Dabei besitzt das dargestellte Laufstreifenprofil drei unterschiedlich lange Pitches P1, P2 und P3, mit P3 als kürzestes, P2 als mittleres und P1 als längstes Pitch. Unter "Pitch" wird dabei, wie es allgemein üblich ist, ein Profilelement, hier ein Block, mit jeweils einer der unmittelbar benachbarten Quernuten verstanden. Innerhalb der einzelnen Pitches P1, P2, P3 besitzen auch die Profilelemente, in diesem Fall die Blöcke 1a, 2a, unterschiedliche Umfangslängen, sodaß, für die Schulterblockreihen betrachtet, die Umfangslänge L1 eines Schulterblockes 1a im längsten Pitch P1 am größten ist, die Umfangslänge L2 eines Schulterblockes 1a im mittleren Pitch P2 kleiner ist als L1 und die Umfangslänge L3 eines Schulterblockes 1a im kürzesten Pitch P3 kleiner ist als L2.

Sämtliche Profilelemente des Laufstreifenprofiles, demnach sämtliche Blöcke 1a, 2a, sind jeweils mit einer Anzahl von parallel zueinander verlaufenden Feineinschnitten 8, 9 versehen. Dabei sind sämtliche dargestellten Feineinschnitte 8, 9 wellenförmig gestaltet, wobei darauf hingewiesen wird, daß auch ein zick-zack-förmiger Verlauf gewählt werden kann. Diese Feineinschnitte besitzen eine Breite von 0,3 mm bis 0,7 mm, insbesondere von 0,4 mm, und können über ihre Längserstreckung mit sich ändernder Tiefe gestaltet werden.

Die Feineinschnitte 8 in den Blöcken 1a der Schulterblockreihen 1 verlaufen zumindest im wesentlichen parallel zu den sich in Reifenquerrichtung erstreckenden Blockkanten und besitzen innerhalb eines Schulterblockes 1a gleiche Abstände voneinander. Dabei sind pro Schulterblock 1a mindestens drei Feineinschnitte 8 vorgesehen.

In einem Block 1a mit der größten Umfangslänge L1 ist nun der Normalabstand a zweier benachbarter Feineinschnitte 8, wobei unter "Normalabstand" der Normalabstand zwischen den Lamellenmittellinien, wie eingezeichnet, zu verstehen ist, am geringsten. In einem Block 1a mit einer Umfangslänge L2 ist der Normalabstand b um 2 bis 4 % größer als der Normalabstand a, in einem Block 1a mit der kleinsten Umfangslänge L3 ist der Normalabstand benachbarter Feineinschnitte 8 um 4 bis 8 % größer als der Normalabstand a. Durch diese Maßnahme wird eine Vergleichsmäßigung der Blocksteifigkeit für sämtliche Schulterblöcke 1a erzielt, was, wie sich herausgestellt hat, auf einige Reifeneigenschaften einen sehr positiven Effekt zeigt, so insbesondere auf das Fahrverhalten, das Naßbremsen und auch den Abrieb.

Generell wird diese erfindungsgemäße Ausgestaltung so getroffen, daß der Normalabstand der Lamellenfeineinschnitte in einem Schulterblock kleinerer Umfangslänge um mindestens 2 % und um bis zu 10 %, insbesondere bis zu 5 %, größer ist als der Normalabstand der Lamellenfeineinschnitte in einem Schulterblock der nächst größeren Umfangslänge. Diese Maßnahme ist daher auch bei Laufstreifenprofilen durchführbar, die zwei verschiedene Pitchlängen, demnach auch Schulterblöcke mit zwei verschiedenen Umfangslängen, besitzen, und auch bei Laufstreifenprofilen, wo mehr als drei Pitchlängen vorgesehen werden.

Eine weitere Maßnahme, die die Blocksteifigkeit und damit auch die erwünschte Beweglichkeit des Blockes beeinflußt, besteht darin, daß die jeweils den Blockkanten benachbarten Lamellenfeineinschnitte 8 einen Normalabstand d zu den Blockkanten besitzen, welcher größer ist als der jeweilige Normalabstand a, b, c der Lamellenfeineinschnitte 8 untereinander. Dieser Abstand d sollte günstigerweise zwischen 5 und 20 %, insbesondere 10 bis 15 %, des jeweiligen Normalabstandes a, b, oder c der Lamellenfeineinschnitte 8 innerhalb eines Blockes 1a betragen.

Bei der Auslegung des Profiles in der Praxis erfolgt eine Abstimmung eines gewählten Abstandes der Lamellenfeineinschnitte auf die Umfangslänge des jeweiligen Blockes.

Wie schon erwähnt sind auch in den mittleren Blockreihen 2 Lamellenfeineinschnitte 9 angeordnet. In jeder Laufstreifenhälfte besitzen dabei diese Lamellenfeineinschnitte 9 eine zu den Quernuten 6 gegensinnige Neigung gegenüber der Umfangsrichtung, der dazugehörige Winkel α beträgt zwischen 15 und 20 °. Diese Anordnung der Lamellenfeineinschnitte 9 hat einen positiven Einfluß auf den Schneegriff. Durch diese Anordnung der Lamellenfeineinschnitte 9 in den mittleren Blockreihen 2 kann auch die Gesamtanzahl der Lamellenfeineinschnitte 9 in den beiden mittleren Blockreihen 2 wesentlich größer gewählt werden als die Gesamtanzahl der Lamellenfeineinschnitte in den Schulterblockreihen. Dabei kann das Profil derart ausgelegt werden, daß in den mittleren Blockreihen 2 um mindestens 50 % mehr Lamellenfeineinschnitte angeordnet werden als in den Schulterblockreihen 1.

Aus Geräuschgründen ist es ferner von Vorteil, wenn sämtliche Feineinschnitte 8, 9 durch gesonderte schmale Entlüftungsnuten entlüftet werden. Im dargestellten Ausführungsbeispiel sind diese Entlüftungsnuten 10 als die die einzelnen Blöcke im wesentlichen in Umfangsrichtung durchquerende Nuten ausgebildet, die eine Breite von ca. 1 mm und eine Tiefe von 1 bis 2 mm besitzen.

## Patentansprüche

1. Fahrzeugluftreifen, insbesondere für den Einsatz unter winterlichen Fahrbedingungen, mit einem Laufstreifenprofil, welches durch in Umfangsrichtung verlaufende Nuten (4) und durch Quernuten (5, 6) in Profilelemente gegliedert ist, die mit mindestens zwei verschiedenen Umfangslängen (L1, L2, L3) vorgesehen sind, wobei reifenschulterseitig als Profilelemente jeweils eine Schulterblockreihe (1) angeordnet ist und wobei zumindest in jedem Schulterblock (1a), vorzugsweise in sämtlichen Profilelementen, jeweils mehrere Lamellenfeineinschnitte (8) angeordnet sind, die jeweils zueinander parallel verlaufen und gleich beabstandet sind, dadurch gekennzeichnet, daß der gegenseitige Normalabstand (a) der Lamellenfeineinschnitte (8) in einem Schulterblock (1a) größerer Umfangslänge (L1) kleiner ist als der gegenseitige Normalabstand (b, c) der Lamellenfeineinschnitte (8) in einem Schulterblock (1a) kleinerer Umfangslänge (L2, L3).

2. Fahrzeugluftreifen nach Anspruch 1, dadurch gekennzeichnet, daß der Normalabstand (b) der Lamellenfeineinschnitte (8) in einem Schulterblock (1a) kleinerer Umfangslänge (L2) um mindestens 2 % und bis zu 10 %, insbesondere um bis zu 5 %, größer ist als der Normalabstand (a) der Lamellenfeineinschnitte (8) in einem Schulterblock (1a) der nächstgrößeren Umfangslänge (L1).

3. Fahrzeugluftreifen nach Anspruch 1 oder 2, dadurch gekennzeichnet, daß die Schulterblöcke (1a) in drei verschiedenen Umfangslängen (L1, L2, L3) vorgesehen werden, wobei in einem Schulterblock (1a) mit mittlerer Umfangslänge (L2) der Normalabstand (b) der Lamellenfeineinschnitte um 2 bis 4 %, in einem Schulterblock (1a) mit der kleinsten Umfangslänge (L3) der Normalabstand (c) benachbarter Feineinschnitte (8) um 4 bis 8 % größer ist als der Normalabstand (a)der Feineinschnitte (8) in einem Schulterblock (1a) mit der größten Umfangslänge (L1).

4. Fahrzeugluftreifen nach einem der Ansprüche 1 bis 3, dadurch gekennzeichnet, daß die Anzahl der Lamellenfeineinschnitte (8) pro Schulterblock (1a) mindestens 3 beträgt.

5. Fahrzeugluftreifen nach einem der Ansprüche 1 bis 4, dadurch gekennzeichnet, daß die Lamellenfeineinschnitte (8) zumindest im wesentlichen parallel zu den Querkanten der Schulterblöcke (1a) verlaufend ausgerichtet sind, wobei der Normalabstand (d) der zu diesen Blockkanten benachbarten Lamellenfeineinschnitten (8) größer ist als der Normalabstand (a, b, c) der Lamellenfeineinschnitte (8) untereinander.

6. Fahrzeugluftreifen nach Anspruch 5, dadurch gekennzeichnet, daß der Normalabstand (d) zu den Blockkanten um 5 bis 20 %, insbesondere um 10 bis 15 %, größer ist als der Normalabstand (a, b, c) der Lamellenfeineinschnitte (8) untereinander.

7. Fahrzeugluftreifen nach einem der Ansprüche 1 bis 6, dadurch gekennzeichnet, daß das Laufstreifenprofil neben den beiden Schulterblockreihen (1) zwei mittlere Blockreihen (2) umfaßt, deren Blöcke (2a) ebenfalls mit einer Vielzahl von Lamellenfeineinschnitten (9) versehen sind, wobei, über den gesamten Reifenumfang betrachtet, die Gesamtanzahl der Lamellenfeineinschnitte (9) in jeder der mittleren Blockreihen (2) um mindestens 50 % größer ist als die Gesamtanzahl der Lamellenfeineinschnitte (8) in den Schulterblockreihen (1).

8. Fahrzeugluftreifen nach einem der Ansprüche 1 bis 7, dadurch gekennzeichnet, daß das Laufstreifenprofil laufrichtungsgebunden gestaltet ist und zumindest im wesentlichen gepfeilt angeordnete Quernuten (5, 6) besitzt, wobei die die Schulterblöcke (1a) trennenden Quernuten (5) gegenüber den in den mittleren Blockreihen (2) verlaufenden Quernuten (6) paarweise jeweils derart angeordnet sind, daß ihre einander zugeordneten Einmündungsbereiche in die jede Schulterblockreihe (1) von der mittleren Blockreihe (2) trennenden Umfangsnut (4) in Reifenquerrichtung betrachtet, einander gegenüberliegen.

## Claims

1. Pneumatic vehicle tyre, more especially for use in wintry travel conditions, having a tread strip profile divided into profile elements, which are provided with at least two different circumferential lengths (L1, L2, L3), by means of grooves (4) which extend in the circumferential direction, a row of shoulder blocks (1) being disposed as profile elements on each shoulder side of the tyre, and a plurality of respective fine laminar incisions (8) being disposed at least in each shoulder block (1a), preferably in all of the profile elements, which incisions each extend parallel to one another and have identical spacings therebetween, characterised in that the mutual normal spacing (a) between the fine laminar incisions (8) in a shoulder block (1a) of greater circumferential length (L1) is shorter than the mutual normal spacing (b, c) between the fine laminar incisions (8) in a shoulder block (1a) of shorter circumferential length (L2, L3).

2. Pneumatic vehicle tyre according to claim 1, characterised in that the normal spacing (b) between the fine laminar incisions (8) in a shoulder block (1a) of shorter circumferential length (L2) is greater, by at least 2 % and up to 10 %, more especially by up to 5 %, than the normal spacing (a) between the fine laminar incisions (8) in a shoulder block (1a) of the next greater circumferential length (L1).

3. Pneumatic vehicle tyre according to claim 1 or 2, characterised in that the shoulder blocks (1a) are provided in three different circumferential lengths (L1, L2, L3), the normal spacing (b) between the fine laminar incisions in a shoulder block (1a) of medium circumferential length (L2) being greater, by 2 to 4 %, than the normal spacing (a) between the fine incisions (8) in a shoulder block (1a) of the greatest circumferential length (L1), and the normal spacing (c) between adjacent fine incisions (8) in a shoulder block (1a) of the shortest circumferential length (L3) being greater, by 4 to 8 %, than said normal spacing (a).

4. Pneumatic vehicle tyre according to one of claims 1 to 3, characterised in that the number of fine laminar incisions (8) per shoulder block (1a) is at least 3.

5. Pneumatic vehicle tyre according to one of claims 1 to 4, characterised in that the fine laminar incisions (8) are orientated so as to extend at least substantially parallel to the transverse edges of the shoulder blocks (1a), the normal spacing (d) between the fine laminar incisions (8), which lie adjacent these block edges, being greater than the normal spacing (a, b, c) between the fine laminar incisions (8).

6. Pneumatic vehicle tyre according to claim 5, characterised in that the normal spacing (d) from the block edges is greater, by 5 to 20 %, more especially by 10 to 15 %, than the normal spacing (a, b, c) between the fine laminar incisions (8).

7. Pneumatic vehicle tyre according to one of claims 1 to 6, characterised in that, in addition to having the two rows of shoulder blocks (1), the tread strip profile includes two central rows of blocks (2), the blocks (2a) of which rows are also provided with a plurality of fine laminar incisions (9), the total number of fine laminar incisions (9) in each of the central rows of blocks (2), when viewed over the entire tyre circumference, being at least 50 % greater than the total number of fine laminar incisions (8) in the rows of shoulder blocks (1).

8. Pneumatic vehicle tyre according to one of claims 1 to 7, characterised in that the tread strip profile has a configuration adapted to the direction of travel and has transverse grooves (5, 6), which are disposed in at least a substantially arrow-shaped manner, the transverse grooves (5) separating the shoulder blocks (1a) and being disposed in pairs opposite the transverse grooves (6), which extend in the central rows of blocks (2), in such a manner that their transitional regions, associated with one another and leading to the circumferential groove (4), which separates each row of shoulder blocks (1) from the central row of blocks (2), lie opposite one another when viewed with respect to the transverse direction of the tyre.

## Revendications

1. Pneumatique de véhicule, en particulier pour l'emploi dans des conditions de circulation hivernales, comprenant un profil de bande de roulement qui est organisé en éléments profilés au moyen de gorges (4) en direction périphérique et de gorges transversales (5, 6), lesdits éléments profilés étant prévus avec au moins deux longueurs périphériques différentes (L1, L2, L3), et l'on prévoit du côté du talon du pneumatique à titre d'éléments profilés une rangée de blocs de talon respective (1), et l'on ménage dans chaque bloc de talon au moins (1a), et de préférence dans la totalité des éléments profilés, plusieurs fines entailles respectives (8) formant des lamelles, lesdites entailles s'étendant respectivement parallèlement les unes aux autres et présentant les mêmes écartements, caractérisé en ce que l'écartement normal mutuel (a) des fines entailles (8) dans un bloc de talon (1a) de plus grande longueur périphérique (L1) est inférieur à l'écartement normal mutuel (b, c) des fines entailles (8) dans un bloc de talon (1a) de plus faible longueur périphérique (L2, L3).

2. Pneumatique de véhicule selon la revendication 1, caractérisé en ce que l'écartement normal (b) des fines entailles (8) dans un bloc de talon (1a) de plus faible longueur périphérique (L2) est supérieur d'au moins 2% et jusqu'à 10%, en particulier 5%, à l'écartement normal (a) des fines entailles (8) dans un bloc de talon (1a) présentant la longueur périphérique immédiatement supérieure (L1).

3. Pneumatique de véhicule selon l'une ou l'autre des revendications 1 et 2, caractérisé en ce que des blocs de talon (1a) sont prévus avec trois longueurs périphériques différentes (L1, L2, L3), et dans un bloc de talon (1a) avec la longueur périphérique moyenne (L2) l'écartement normal (b) des fines entailles est supérieur de 2 à 4% à l'écartement normal (a) des fines entailles (8) dans un bloc de talon (1a) avec la plus grande longueur périphérique (L1), et dans un bloc de talon (1a) avec la plus petite longueur périphérique (L3) l'écartement normal (c) des fines entailles (8) est supérieur de 4 à 8% à l'écartement normal (a) des fines entailles (8) dans un bloc de talon (1a) avec la plus grande longueur périphérique (L1).

4. Pneumatique de véhicule selon l'une des revendications 1 à 3, caractérisé en ce que le nombre des fines entailles (8) par bloc de talon (1a) s'élève à au moins trois.

5. Pneumatique de véhicule selon l'une des revendications 1 à 4, caractérisé en ce que les fines entailles (8) sont orientées de manière à s'étendre au moins sensiblement parallèlement aux arêtes transversales des blocs de talon (1a), et en ce que l'écartement normal (d) des fines entailles (8) voisines de ces arêtes des blocs est supérieur à l'écartement normal (a, b, c) des fines entailles (8) les unes des autres.

6. Pneumatique de véhicule selon la revendication 5, caractérisé en ce que l'écartement normal (d) vis-à-vis des arêtes des blocs est supérieur de 5 à 20%, et en particulier d'environ 10 à 15%, à l'écartement normal (a, b, c) des fines entailles (8) les unes des autres.

7. Pneumatique de véhicule selon l'une des revendications 1 à 6, caractérisé en ce que le profil de bande de roulement comprend, outre les deux rangées de blocs de talon (1), deux rangées de blocs médians (2), dont les blocs (2a) sont également pourvus d'une pluralité de fines entailles (9) formant des lamelles, et en ce que, considéré sur la totalité de la périphérie du pneumatique, le nombre total des fines entailles (9) dans chacune des rangées de blocs médians (2) est supérieur d'au moins 50% au nombre total des fines entailles (8) dans les rangées de blocs de talon (1).

8. Pneumatique de véhicule selon l'une des revendications 1 à 7, caractérisé en ce que le profil de bande de roulement est conçu en considération du sens de roulement, et possède des gorges transversales agencées au moins essentiellement en forme de flèche, dans lesquelles les gorges transversales (5) qui séparent les blocs de talon (1a) sont agencées respectivement par paires vis-à-vis des gorges transversales (6) qui s'étendent dans les rangées de blocs médians (2), de telle manière que leurs zones d'embouchure mutuellement associées, vers la gorge périphérique (4) qui sépare chaque rangée de blocs de talon (1) vis-à-vis de la rangée de blocs médians (2), sont situées à l'opposé l'une de l'autre, considérées en direction transversale du pneumatique.
